# DEMANDE DE BREVET EUROPEEN

(11) **EP 0 992 950 A1**
(43) Date de publication de la demande: **12.04.2000**
(21) Numéro de dépôt: 99402324.0
(22) Date de dépôt: 23.09.1999
(51) Int. Cl.: G07C 9/02, G07B 15/04, G07F 7/08, G07F 7/02

(54) **Procédé et dispositif de paiement sans contact, utilisant un support revalorisable**

(30) Priorité: 05.10.1998 FR 9812429
(71) Demandeur: ALCATEL, 75008 Paris (FR)
(72) Inventeur: Moreau, Jean-Louis, 91580 Etrechy (FR); Simonin, Marcel, 91220 Bretigny sur Orge (FR)
(74) Mandataire: Sciaux, Edmond

(57) **Abrégé**

Dans un système de transport utilisant des cartes à microcircuit sans contact, on contraint les usagers à restituer chaque carte lorsque le crédit qu'elle représente est épuisé. Elles sont revalorisées puis vendues de nouveau. En récupérant et en revalorisant les cartes on en réduit le coût de la billetterie par trajet.

## Description

La présente invention a pour objet un procédé et un dispositif de paiement sans contact utilisant un support revalorisable. Typiquement ce support est une carte à microcircuit ("carte à puce"), lisible et inscriptible sans contact via une liaison radio, mais l'invention est applicable à tous les supports réinscriptibles qui sont lisibles et inscriptibles sans contact. Une carte à puce lisible et inscriptible via une liaison radio peut comporter en outre des moyens susceptibles d'être lus par un procédé à contact : lecture magnétique, lecture optique, ou lecture électrique ; pour être lisible et inscriptible aussi par des lecteurs à contact, c'est à dire nécessitant l'introduction dans une machine.

Le procédé selon l'invention est plus particulièrement destiné à être utilisé dans le domaine de la billettique pour les transports. Il sera décrit pour ce domaine, mais d'autres domaines sont envisageables, notamment la distribution automatique.

Les titres de transport ont généralement un support à usage unique, parce qu'ils sont peu coûteux vis à vis du prix du transport : par exemple des tickets de papier comportant une piste magnétique. Quand un trajet, ou un nombre de trajets, prédéterminé a été effectué, ou quand une date limite de validité a été dépassée, l'usager jette son titre de transport. Ces supports sont lus par contact dans un lecteur.

Ces procédés de paiement utilisant une lecture par contact ont pour inconvénient un faible débit d' utilisateurs, parce que chaque utilisateur met un certain temps pour s'arrêter devant un portillon, sortir son ticket d'une poche ou d'un sac, l'introduire dans une machine, puis le récupérer. Il est nécessaire de mettre des portillons en parallèle pour augmenter le débit d'utilisateurs.

Les systèmes billettiques des transports publics évoluent depuis plusieurs années de la billetterie classique vers l'utilisation de cartes à puce sans contact. Cependant, le coût de ces cartes sans contact (plusieurs centaines de fois le prix d'un ticket en papier à piste magnétique) limite leur utilisation aux titres d'abonnement ou titres à valeur (titres que l'utilisateur peut recharger lui-même dans une machine automatique acceptant le paiement par billets de banque, pièces ou carte de crédit), de façon à garder un ratio voisin du pour-cent entre coût du titre par trajet et le prix d'un trajet. En conséquence, une billetterie classique reste utilisée soit pour l'ensemble des utilisateurs soit au moins pour les utilisateurs occasionnels qui achètent des titres valables pour un seul trajet ("titres unitaires").

Une carte à puce sans contact est actuellement utilisée comme titre de transport dans les transports publics, à titre expérimental en France (à Paris et à Marseille) et en exploitation réelle (à Séoul, à Hong Kong, à Washington...). Ce système est généralement appelé télébillettique. La carte peut communiquer à courte distance (une dizaine de centimètres environ) avec un coupleur pourvu d'une antenne, pour toutes les fonctions classiques d'une carte à microcircuit, telles que écriture, lecture, authentification, etc. Le plus souvent, elle reçoit également de l'antenne l'énergie nécessaire à son fonctionnement. Ce type de communication à distance est en cours de normalisation selon la norme ISO 14443. Il existe également des cartes combinées, fonctionnant sans contact pour les transactions d'accès au transport, et fonctionnant avec contact pour les transactions de personnalisation ou de rechargement, en utilisant des équipements classiques à contacts.

Ce système télébillettique présente un certain nombre d'avantages par rapport à une billettique classique papier ou magnétique :
- pas d'insertion du ticket dans une fente et de reprise du ticket dans cette même fente ou à une goulotte de sortie, donc réduction du temps global d'une transaction en éliminant le temps humain ; et temps de transaction électronique réduit (environ 100 à 200 ms) par rapport à une transaction magnétique (de 500 à 1000 ms) ; ces deux caractéristiques entraînant une augmentation du débit du point de contrôle, qui se traduit par une réduction du nombre de ces points ;
- l'utilisateur garde son titre de transport en main (ou dans son sac), ce qui élimine les risques de perte ou de vol du titre de transport au moment du paiement ;
- le volume des données inscrites dans la carte à mémoire est plus important que sur un ticket magnétique ; un exploitant peut donc enrichir sa connaissance de l'utilisation du réseau de transport ;
- un lecteur télébillettique est moins cher qu'un lecteur magnétique (rapport de 5 environ) ;
- ce même lecteur nécessite moins d'entretien puisqu'il n'y a pas de pièces mécaniques en mouvement ;
- limitation des possibilités de vandalisme ;
- possibilité de tarification élargie ;
- ouverture sur d'autres applications (porte-monnaie électronique).

En contrepartie, le coût d'un titre sans contact est beaucoup plus élevé que celui d'un titre magnétique (rapport d'au moins 100). Ce coût est pratiquement incompatible avec le coût d'un voyage unitaire, ou d'un service élémentaire payable avec un tel titre. Il n'est pas envisageable d'utiliser un tel support pour le paiement d'un seul trajet puis de le jeter.

La carte à puce sans contact est donc réservée aux titres d'abonnement ou aux titres à valeur. Dans les transports, pour les utilisateurs occasionnels qui représentent environ 20 % de l'ensemble des voyageurs, soit environ 40 % des revenus (les titres unitaires ne bénéficient pas de tarif réduit), on continue à utiliser des tickets bons marchés pour les titres unitaires, par exemple des titres en papier avec piste magnétique. De ce fait, l'intérêt de la télébillettique se trouve considérablement réduit parce que la nécessité de la coexistence des deux systèmes entraîne des surcoûts d'installation, de maintenance, et une limitation des débits.

Dans le domaine de la billettique classique, le problème de la coexistence de deux systèmes a été résolu (en particulier en Asie) en utilisant des cartes magnétiques en plastique, au format standard, pour tous les types de titre, au lieu d'utiliser d'une part des cartes en plastiques pour les abonnements et titres à valeur, et, d'autre part, des tickets en papier ou cartonnette pour les titres unitaires. Le coût de fabrication de chaque carte en plastique est plus important que celui d'un ticket en papier ou cartonnette (mais très inférieur au coût des cartes à puces). Pour résoudre ce problème de coût, on procède à un recyclage qui permet de réduire le coût par trajet : Une carte magnétique insérée dans un lecteur est avalée par ce lecteur lorsque sa valeur devient nulle. Elle est ensuite revalorisée par une nouvelle inscription magnétique, après contrôle de ses caractéristiques physiques, puis revendue. Elle peut ainsi être réutilisée plusieurs centaines de fois, ce qui réduit le coût par trajet et évite donc de faire coexister deux systèmes.

Une société de transport n'a aucune difficulté pour récupérer les cartes magnétiques puisque tous les usagers doivent, dans tous les cas, introduire leur carte magnétique dans une borne qui lit la piste magnétique sur la carte, y inscrit éventuellement des données, puis déverrouille un portillon ou une barrière, si la carte représente un crédit suffisant pour un trajet. Le cycle d'une carte magnétique est le suivant dans le cas d'un recyclage centralisé dans un réseau de métropolitain :
1 - Les voyageurs achètent leurs titres de transport (titres unitaires, titres à valeur ou à durée déterminée, etc...) à un distributeur automatique ou à un guichet.
2 - Le titre est introduit dans le lecteur d'une borne qui contrôle l'accès physique des passagers, en entrée et en sortie.
3 - En sortie, le titre est rendu si, après traitement, il est encore valable (s'il reste encore un nombre de voyages ou une somme d'argent, ou si la date de validité n'est pas atteinte).
4 - Le titre est avalé par la borne de sortie si sa valeur est nulle après traitement (ce qui est le cas de tous les titres unitaires).
5 - Dans le cas d'un recyclage centralisé, les titres récupérés sont transportés vers un centre de tri. On contrôle si leur état leur permet une nouvelle utilisation. Ceux qui sont réutilisables sont triés par catégories.
6 - Les titres triés sont transmis aux guichets ou aux distributeurs automatiques pour être de nouveau valorisés, par une inscription magnétique, au moment de la distribution.

La description ci-dessus est simplifiée. Le traitement des titres à valeur peut être différent. L'utilisateur peut les recharger lui-même à une machine automatique acceptant le paiement par billets de banque, pièces ou carte de crédit. Ils ne sont alors ni capturés, ni recyclés par le portillon. D'autres variantes sont également possibles. La tendance actuelle est au recyclage décentralisé au niveau de chaque station. Les titres sont triés dans chaque portillon, ce qui limite la circulation des tickets mais complique les portillons.

En résumé, on connaît d'une part des procédés de paiement utilisant des supports peu coûteux, lus par contact dans un lecteur, mais avec un problème de faiblesse de débit des utilisateurs; et on connaît d'autre part des procédés de paiement utilisant des supports sans contact procurant un débit rapide des utilisateurs, mais avec un problème de coût des supports qui conduit à restreindre leur utilisation à certains titres et donc faire coexister deux systèmes de billetterie.

Le but de l'invention est de favoriser l'utilisation des supports sans contact pour des paiements de faible valeur.

L'objet de l'invention est un procédé de paiement sans contact, utilisant un support revalorisable, consistant à :
- présenter ce support au voisinage d'un lecteur sans contact,
- débiter, dans ce support, le prix correspondant à un service demandé, si le crédit que ce support représente est au moins égal au prix à payer ;
**caractérisé** en ce que, pour contraindre l'usager du support à restituer ce support quand le crédit que ce support représente est plus petit qu'un montant fixé, il consiste en outre à :
- vérifier si le crédit que ce support représente est plus petit qu'un montant fixé, et, si c'est le cas, demander à l'usager de restituer le support qu'il détient ;
- et à ne fournir un service qu'après que l'usager ait restitué le support.

Ainsi on contraint l'usager à rendre le support à fin de le recycler. Par exemple, dans le cas de la billetterie d'une société de transport, le procédé consiste à lire sans contact le support, puis à ouvrir un portillon pour laisser passer l'usager au début et/ou à la fin du voyage si le support contient encore un crédit suffisant pour au moins un autre trajet. Par contre, si le crédit a été épuisé par le trajet en cours de paiement, ou qui vient d'être effectué, on demande à l'usager d'introduire le support dans une machine qui avalera le support puis ouvrira le portillon. Par exemple, on contraint l'usager à restituer le support en conditionnant l'ouverture d'un portillon d'entrée dans le zone contrôlée ou l'ouverture d'un portillon de sortie de le zone contrôlée à la restitution du support. S'il ne restitue pas le support, l'usager ne peut pas accéder à la zone contrôlée ou ne peut pas en sortir.

Cette restitution peut être faite en introduisant le support dans une machine analogue à une borne de passage classique associée à un portillon classique. Ainsi le support est utilisé la plupart du temps sans contact, ce qui permet un débit élevé d'usagers, et il est utilisé exceptionnellement comme un support classique à contact, le jour où il doit être restitué. Ce jour là, l'usager doit extraire la carte de sa poche ou de son sac, et l'introduire dans une borne pour la restituer. La procédure est alors plus longue que d'habitude, mais globalement ce procédé permet un débit élevé d'utilisateurs grâce au fait que, dans la plupart des cas, les utilisateurs passent rapidement grâce à la lecture sans contact.

Le recyclage pour les titres unitaires des voyageurs occasionnels et éventuellement pour les titres à valeur permet de réduire leur coût et donc de généraliser utilisation des supports sans contact.

Le recyclage des titres simples permet de diviser le coût du support rapporté à chaque transaction par le nombre de réutilisations. Par exemple, un support coûtant de l'ordre de 10 FF et réutilisé 500 fois entraîne un coût par transaction de 2 centimes, comparable à celui d'un ticket en papier à piste magnétique au format Edmonson.

Préférentiellement, le système de paiement contraint physiquement un utilisateur à restituer le support quand cela lui est demandé. Le procédé selon l'invention est donc préférentiellement destiné aux systèmes disposant de portillons ou barrières tournantes pour le contrôle physique du passage des voyageurs. Cependant, il peut être appliqué aussi aux systèmes de paiement comportant des valideurs sans contrôle physique du passage. Dans ce cas, le procédé selon l'invention consiste à utiliser seulement des signaux pour indiquer à l'usager que l'accès lui est refusé (affichage d'un message, et avertisseur sonore).

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un exemple de borne de passage et de support à microcircuit utilisables pour mettre en oeuvre le procédé de l'invention, dans le domaine des transports ;
- Figure 2 : un organigramme montrant la succession des étapes du procédé de l'invention ;
- Figure 3 : une représentation plus détaillée de la borne de la figure 1.

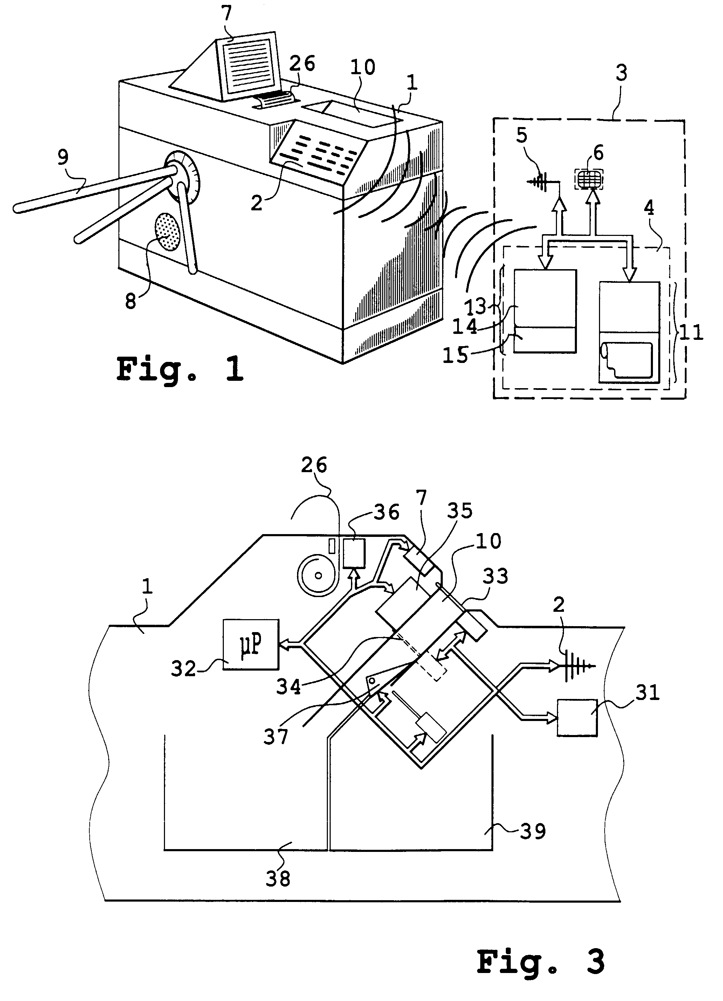

Cet exemple correspond à un mode d'utilisation où la borne contrôle l'accès **en entrée** d'une zone contrôlée. La **figure 1** montre :
- une borne 1 qui comporte un lecteur sans contact ayant une antenne 2 située sous un capot transparent aux radiations électromagnétiques ;
- et un support sans contact qui est une carte à puce 3 comportant un microcircuit 4 en relation avec le monde extérieur par une antenne 5, et optionnellement une interface de connexion 6 à contacts électriques.

La borne 1 a la forme d'un coffre et elle borde un couloir barré par une barrière tournante 9, à trois branches. La borne 1 comporte en outre :
- un afficheur 7 et un haut-parleur 8 pour donner des indications à un usager;
- et un dispositif de collecte constitué essentiellement d'une goulotte de collecte 10 dans laquelle l'utilisateur glisse, ou jette, sa carte à puce si l'afficheur 7 et le haut-parleur 8 le lui demandent.

La carte à puce 3 comporte :
- des moyens classiques non représentés pour extraire l'énergie électrique, nécessaire à son fonctionnement, du signal électromagnétique reçu par son antenne 5 ;
- des moyens classiques non représentés pour transmettre et recevoir des données via cette antenne 5 ;
- un circuit logique 11 pour traiter ces données (par exemple un microprocesseur muni d'un programme) en vue d'effectuer notamment une opération de paiement et de sécuriser les données échangées avec la borne 1;
- et une mémoire 13, non volatile, contenant des données de transaction.

Un crédit est mémorisé dans une partie 14 de la mémoire 13. Certaines des unités de crédit sont oblitérées électroniquement par le circuit 11, de façon à faire apparaître le caractère consommé de leur valeur. La mémoire 13 comporte en outre une partie 15 pour contenir un identificateur, par exemple le numéro de Sécurité Sociale de l'usager.

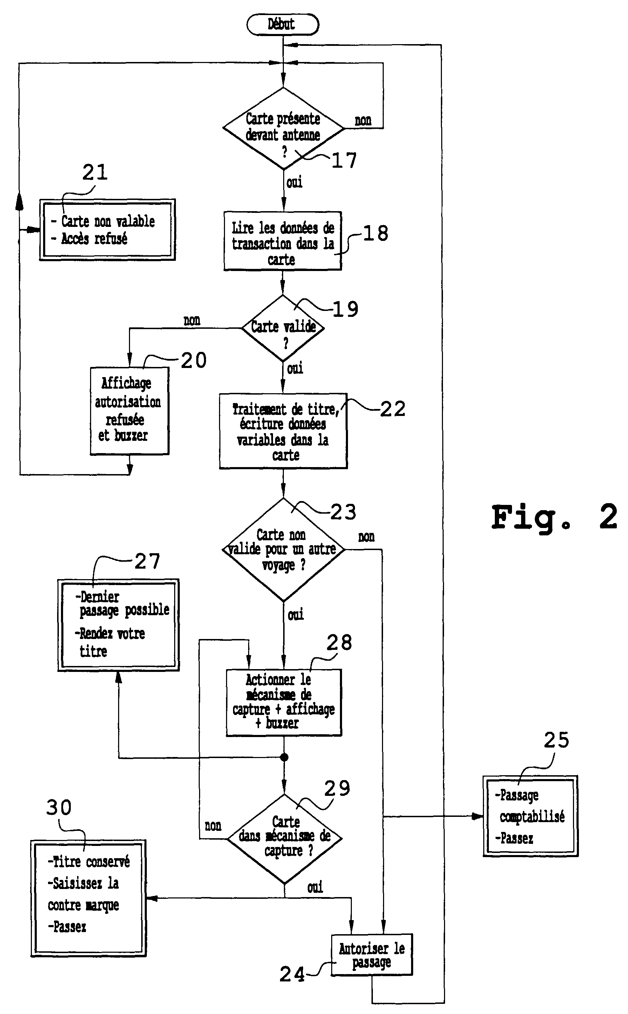

Un organigramme d'un exemple de mise en oeuvre du procédé de l'invention est représenté sur la **figure 2**. Lorsqu'un utilisateur muni de sa carte à puce 3 se présente à proximité de la borne 1, le lecteur de carte à puce sans contact détecte la présence du microcircuit 4. Cette détection correspond à une étape 17 sur la figure 2. Lorsque la carte 3 est sollicitée par les signaux émis par l'antenne 2, elle transmet des données au lecteur de la borne 1.

Au cours d'une étape 18, le lecteur de la borne 1 lit ainsi des données de transaction contenues dans la mémoire 13 de la carte 3. Le lecteur effectue alors une opération 19 qui est un test pour savoir si la carte est valide. Le test vérifie si la carte 3 correspond à l'usage pour lequel la borne 1 est destinée :
- La carte 3 peut ne pas correspondre à la société de transport qui exploite la borne 1. Dans ce cas, la carte est refusée, mais non avalée. Une opération 20 consiste alors à afficher un message sur l'écran 7 et émettre une sonnerie ou un message sonore par le haut-parleur 8, indiquant que la carte ne permet pas l'accès.
- Si la carte est valide, le lecteur de la borne 1 modifie le crédit enregistré dans la partie 14 de la mémoire 13 au cours d'une opération 22. Il fait inscrire des données par le circuit 11. A la suite de cette écriture, il est possible que la carte ne soit plus valable pour un autre trajet ultérieur. Au cours d'un test 23, le lecteur de la borne 1 teste la validité de la carte pour un autre trajet, en comparant le crédit restant à un montant prédéterminé :
   -- Si la carte est encore valide pour un autre trajet, ou une autre utilisation, le lecteur autorise le passage au cours d'une étape 24. Le lecteur commande le déblocage d'un verrou qui bloque la rotation de la barrière 9. Il affiche sur l'écran 7 un message 25 indiquant que la consommation du service a été comptabilisé, et invitant l'utilisateur à franchir la barrière. L'affichage peut être remplacé par l'allumage d'une lampe verte ou un autre signal visuel, et / ou sonore, et / ou mécanique. Dans le cas présent, il reste à l'utilisateur à passer.
   -- Si la carte n'est pas valable pour un autre trajet, une étape 28 consiste à demander à l'utilisateur d'insérer la carte dans la goulotte 10, pour la restituer à la société de transport (message 27) car, dans cet exemple, la borne 1 contrôle l'entrée à une zone contrôlée et on demande à l'usager de rendre sa carte avant d'effectuer son voyage. On lui donnera en échange un titre de transport 26 lui permettant de justifier, au cours de son trajet du caractère légal de sa situation. L'opération 28 consiste alors à afficher un message sur l'écran 7 et / ou émettre un message sonore par le haut-parleur 8, indiquant que la carte doit être restituée en l'insérant dans la goulotte 10. Simultanément la borne 1 se prépare à avaler la carte. En attendant, la barrière reste verrouillée. Un test 29 vérifie que la carte a été restituée :
      --- Si c'est le cas, un message 30 sur l'écran 7 et / ou un message sonore par le haut-parleur 8, demande à l'utilisateur de prendre le ticket 26, puis de franchir la barrière 9. Puis l'opération 24 déverrouille la barrière 9.
      --- Si ce n'est pas le cas, la barrière 9 n'est pas déverrouillée. Au bout d'un temps prédéterminé, la borne 1 revient à l'opération 1 pour détecter la carte d'un autre usager.

Dans un autre mode d'utilisation, la borne 1 contrôle l'accès à une **sortie** de la zone contrôlée. Dans ce cas, on demande à l'usager de rendre sa carte à la fin de son trajet, mais il n'est pas nécessaire de délivrer un ticket 26 en échange.

La **figure 3** montre d'une manière plus détaillée la constitution de la borne 1. Celle-ci comporte principalement une imprimante 36, un lecteur de carte sans contact, 31, en relation avec l'antenne 2, et un microprocesseur 32. Pour éviter des dépôts d'objets inutiles dans la goulotte 10 celle-ci est munie d'une trappe d'accès 33. L'ouverture de la trappe 33 est commandée par le microprocesseur 32 seulement lorsque celui-ci reçoit du lecteur 31 une information signalant la présence d'une carte 3 dont le crédit vient d'être épuisé et qui va donc être restituée. Dans tous les autres cas, la trappe 33 reste fermée.

Pour mettre en oeuvre le test 29, la goulotte 10 est munie en aval d'une autre trappe 34, elle aussi commandée par le microprocesseur 32. Cette trappe 34 sert à maintenir dans la goulotte 10 un une carte 3 ou tout autre objet qui y a été déposé. Durant ce maintien, la nature de l'objet déposé est testée. Dans ce but, un détecteur 35 est situé en regard de la goulotte 10, légèrement au-dessus de la trappe 34. Ce détecteur 35 peut être très simple : par exemple un détecteur optique ou infrarouge. Il peut aussi être une antenne du même type que l'antenne 2 et qui est couplée au lecteur 31 pour réaliser une lecture dans la mémoire 13 de la carte déposée.
- Lorsque la présence d'une carte 3 est détectée dans la goulotte 10, le processeur 32 autorise le passage de l'usager, et commande l'ouverture de la trappe 34, et commande l'imprimante 36 pour délivrer un ticket 26. Toutes les opérations sont temporisées et synchronisées les unes avec les autres pour correspondre à une perception efficace par l'usager.
- Tant que la présence d'une carte 3 n'est pas détectée dans la goulotte 10, le microprocesseur 32 laisse la trappe 34 fermée, et ne déverrouille pas la barrière 9. Si un objet étranger est déposé il reste dans la goulotte 10, et la trappe 33 reste ouverte, jusqu'à ce qu'un usager enlève l'objet étranger pour déposer une carte.

En option, un aiguillage 37 commandé par le microprocesseur 32 permet de trier les cartes en deux catégories. Pour remédier aux dépôts d'objets divers, l'aiguillage 37 peut aussi permettre de séparer les cartes des objets divers qui auraient été jetés dans la goulotte 10. Dans ce but, le réceptacle de la borne 1 comporte deux bacs 38 et 39. Dans ces bacs, les cartes peuvent être stockées en vrac, ou rangées en piles pour en faciliter la réutilisation.

Dans la pratique la fente d'introduction située au-dessus de la trappe 33 a des formes adaptées pour faciliter l'introduction de la carte. Cette ouverture peut être plus large qu'une fente d'introduction d'un lecteur magnétique puisqu'elle n'a qu'une fonction de guidage assez lâche, de façon à faciliter au maximum l'introduction rapide de la carte.

De préférence les deux trappes 33 et 34 seront actionnées de telle façon que l'ouverture de la trappe 34 soit suivie d'une deuxième détection par le détecteur 35 pour vérifier que la carte introduite n'est plus présente, avant d'autoriser la réouverture de la trappe 33. De cette façon, on évite les récupérations de cartes par des méthodes dites de pêche à la ligne.

Les cartes valables pour un seul trajet (cartes dites unitaires) n'ont pas besoin d'être revalorisées, elles peuvent être recyclés sans réinscription dans leurs mémoires. Les autres titres subissent un rechargement d'unités en réinscrivant une nouvelle valeur dans le microcircuit 4. Il faut généralement une clef secrète pour pouvoir recharger le microcircuit 4. Les précautions pour la sécurité de la clef secrète sont simplifiées puisque cette revalorisation ne sera effectuée que par les employés de la société propriétaire de la borne 1.

Le mode de recyclage est de préférence adapté aux conditions particulières d'exploitation. Dans le cas où seules les cartes unitaires sont recyclés puis utilisés pour une distribution automatique, les cartes collectées sont empilés dans des magasins sans être revalorisés. Elles le sont au moment de la vente. Pour une distribution manuelle aux guichets des stations, équipées d'un lecteur permettant la revalorisation, les cartes sont empilées dans des boîtes sans être revalorisées. Elles le sont au moment de la vente. Pour la distribution par des revendeurs extérieurs, ne disposant pas de moyen de revalorisation, les titres sont revalorisés par un équipement spécifique sécurisé et appartenant à la société de transport.

L'empilage peut se faire dans n'importe quel sens, à la différence des cartes magnétiques, ce qui en simplifie le mécanisme dans les bornes.

## Revendications

1. Procédé de paiement sans contact, utilisant un support revalorisable, consistant à :
- présenter ce support au voisinage d'un lecteur sans contact (2, 31),
- débiter, dans ce support, le prix correspondant à un service demandé, si le crédit que ce support représente est au moins égal au prix à payer;
**caractérisé** en ce que, pour contraindre l'usager du support à restituer ce support quand le crédit que ce support représente est plus petit qu'un montant fixé, il consiste en outre à :
- vérifier si le crédit que ce support représente est plus petit qu'un montant fixé, et, si c'est le cas, demander à l'usager de restituer le support qu'il détient ;
- et à ne fournir un service qu'après que l'usager ait restitué le support.

2. Procédé selon la revendication 1, caractérisé en ce que pour demander à l'usager de restituer le support, il consiste à émettre un signal lumineux, et / ou sonore, et / ou mécanique.

3. Procédé selon la revendication 1, caractérisé en ce que pour demander à l'usager de restituer le support, il consiste à ouvrir une première trappe (33).

4. Procédé selon la revendication 1, caractérisé en ce qu'il consiste en outre à :
- vérifier que chaque objet restitué par un usager est bien un support revalorisable,
- et à ne fournir un service que si cet objet est bien un support revalorisable.

5. Procédé selon les revendications 3 et 4, caractérisé en ce que, pour vérifier que chaque objet restitué par un usager est bien un support revalorisable, il consiste à :
- collecter l'objet restitué dans une goulotte de collecte (10) située sous la première trappe (33),
- retenir l'objet dans cette goulotte au moyen d'une seconde trappe (34),
- vérifier que l'objet placé dans la goulotte est bien un support revalorisable,
- puis ouvrir la seconde trappe puis ouvrir la seconde trappe si l'objet restitué est bien un support revalorisable.

6. Procédé selon l'une des revendications 1 à 5, caractérisé en ce qu'il consiste en outre à trier les supports collectés dans différents bacs du réceptacle, en fonction de la nature de ces supports.

7. Procédé selon l'une des revendications 1 à 6, caractérisé en ce qu'il consiste en outre à délivrer à chaque usager qui a restitué son support revalorisable un ticket attestant qu'il a restitué son support revalorisable.

8. Procédé selon l'une des revendications 1 à 7, caractérisé en ce que pour débiter le prix correspondant à un service demandé, il consiste à inscrire des données dans une mémoire d'un microcircuit incorporé dans le support.

9. Dispositif de paiement sans contact, utilisant un support revalorisable, comportant :
- un lecteur sans contact (2, 31),
- des moyens (31) pour débiter, dans ce support, le prix correspondant à un service demandé, si le crédit que ce support représente est au moins égal au prix à payer ;
**caractérisé** en ce que, pour contraindre l'usager du support à restituer ce support quand le crédit que ce support représente est plus petit qu'un montant fixé, il comporte :
- des moyens (31, 2) pour vérifier si le crédit que ce support représente est plus petit qu'un montant fixé,
- des moyens (7, 8, 33) pour demander à l'usager de restituer le support qu'il détient, si le crédit que ce support représente est plus petit qu'un montant fixé ;
- des moyens (10, 33) pour collecter le support restitué ;
- et des moyens (9, 32) pour ne fournir un service qu'après que l'usager ait restitué le support.

10. Dispositif selon la revendication 9, caractérisé en ce que les moyens pour demander à l'usager de restituer le support comportent des moyens pour émettre un signal lumineux (7), et / ou sonore (8), et / ou mécanique (33).

11. Dispositif selon la revendication 10, caractérisé en ce que les moyens pour demander à l'usager de restituer le support comportent une première trappe (33) et des moyens (31) pour ouvrir cette trappe (33).

12. Dispositif selon la revendication 11, caractérisé en ce qu'il comporte en outre :
- des moyens (35) pour vérifier que chaque objet restitué par un usager est bien un support revalorisable,
- et des moyens (32, 9) pour ne fournir un service que si cet objet est bien un support revalorisable.

13. Dispositif selon la revendication 12, caractérisé en ce qu'il comporte en outre :
- une seconde trappe (34) en aval de la première trappe (33), et une goulotte (10) entre ces deux trappes,
- et des moyens (31) pour ouvrir cette seconde trappe seulement si les moyens (35) pour vérifier indiquent qu'un objet placé dans la goulotte est bien un support revalorisable.

14. Dispositif selon l'une des revendications 9 à 13, caractérisé en ce qu'il comporte en outre des moyens (35, 32, 37) pour aiguiller les supports collectés vers différents bacs (38, 39), en fonction de la nature de ces supports.

15. Dispositif selon l'une des revendications 9 à 14, caractérisé en ce qu'il comporte en outre des moyens (26,32) pour délivrer à chaque usager qui a restitué son support revalorisable un ticket attestant qu'il a restitué son support revalorisable.

16. Dispositif selon l'une des revendications 9 à 15, caractérisé en ce que pour débiter le prix correspondant à un service demandé, il comporte des moyens (31) pour inscrire des données dans une mémoire d'un microcircuit incorporé dans le support.
